# EUROPEAN PATENT SPECIFICATION

(11) **EP 2 424 355 B1**
(45) Date of publication and mention of the grant of the patent: **18.03.2015**
(21) Application number: 10770050.2
(22) Date of filing: 22.04.2010
(51) Int. Cl.: A01N 35/02, A01N 35/06, A01P 7/04, A01N 49/00

(54) **BED BUG CONTROL AND REPELLENCY**
BEKÄMPFUNG UND FERNHALTUNG VON BETTWANZEN
PRODUIT ÉRADIQUANT ET REPOUSSANT LES PUNAISES DE LIT

(30) Priority: 28.04.2009 US 214766 P
(43) Date of publication of application: 07.03.2012
(73) Proprietor: Bedoukian Research, Inc., Danbury, CT 06810 (US)
(72) Inventor: BEDOUKIAN, Robert, H., West Redding CT 06896 (US)
(74) Representative: Vossius & Partner
(86) International application number: PCT/US2010/001198
(87) International publication number: WO 2010/126576

(56) References cited:
- WO-A1-2010/051027
- US-A- 3 426 133
- US-A- 4 548 764
- US-A1- 2005 187 289
- US-A1- 2005 245 407
- US-A1- 2007 111 918
- US-B1- 7 378 557
- US-B1- 7 378 557
- US-B2- 7 288 573
- US-B2- 7 381 431
- DAVID J. MOORE ET AL: "Laboratory Evaluations of Insecticide Product Efficacy for Control of Cimex lectularius", JOURNAL OF ECONOMIC ENTOMOLOGY, vol. 99, no. 6, 1 December 2006 (2006-12-01), pages 2080-2086, XP55041169, ISSN: 0022-0493, DOI: 10.1603/0022-0493-99.6.2080

## Description

### Field of the Invention

This invention relates to non-therapeutic methods for the control or repellency of bed bugs

### Background to the Invention

There have been a number of publications regarding various characteristics of bed bugs. See generally C. Johnson, The ecology of the bed-bug, Cimex lectularius L., 41 Journal of Hygiene 345-461 (1942); H. Levinson et al., Assembling and alerting scents produced by the bedbug, Cimex lectularius L., 27 Experientia: 102-103 (1971); H. Levinson et al., Action and composition of the alarm pheromone of the bedbug Cimex lectularius L., 61 Naturwissenschaften 684-685 (1974); H. Levinson et al., Structure of sensilla, olfactory perception, and behavior of the bedbug, Cimex lectularius, in response to its alarm pheromone, 20 Journal of Insect Physiology 1231-1248 (1974); K. Mellanby, The physiology and activity of the bed-bug (Cimex lectularius) in a natural infestation, 31 Parasitology 200-211 (1939); and H. Schmitz et al., The ability of Rhodnius prolixus (Hemiptera; Reduviidae) to approach a thermal source solely by its infrared radiation, 46 Journal of Insect Physiology 745-751 (2000).

Bed bugs feed on human blood. Thus, bed bugs are not merely unsightly, they leave ugly skin markings. However problematic this is for residential bedrooms, it is an even more serious problem for hotels and the like. With respect to such commercial bedrooms there is more opportunity for external infection sources to bring bed bugs to the site, and should there be an unknown infestation which causes biting of customers before it is dealt with, there is a severe risk of customer dissatisfaction and adverse publicity, likely leading to a long term significant reputation loss.

Recent data suggests bed bug infestations *(Cimex* species) of human domiciles are on the rise. At least 92 species of bed bugs have been identified globally, of which at least 16 species are in the North American continent. Generally, bed bugs are parasitic pests with its hosts including humans and various domesticated animals. It is believed that bed bug infestations are becoming more problematic now at least in part because long acting, residual insecticides are no longer being used to keep bedbug populations in check. In addition, increased international travel and insecticide resistance have made bedbug infestations spread and control with insecticides very difficult. In terms of scale, such infestations are of particular concern for hoteliers, cruise ships, trains, daycare facilities, and the like because of the business reputation risk posed by bad press or bad reviews. Other problematic areas tend to include nursing homes, barracks, dorms, hospitals, and various other forms of high density housing. Nonetheless, single-family homes can likewise be impacted adversely.

There have been attempts to control bedbug infestation through applications of insecticidal chemicals to infected areas and materials (especially mattresses). This approach has some drawbacks. For example, it can expose those using a treated area or mattress too soon after application to odor or other undesired characteristics of the pesticidal chemical. Further, unless the chemicals are used regularly, without regard to whether an infestation is known to already exist (which procedure will significantly increase costs), those sleeping in an infected area can be bitten before one knows to begin treatment.

Bed bugs had nearly been eradicated by the widespread use of potent insecticides such as DDT. However, many of these strong insecticides have been banned from the United States and replaced with weaker insecticides such as pyrethroids. Many bed bugs have grown resistant to the weaker insecticides. In a study at the University of Kentucky bed bugs were randomly collected from across the United States. These "wild" bed bugs were up to several thousands of times more resistant to pyrethroids than were laboratory bed bugs. Another problem with current insecticide use is that the broad-spectrum insecticide sprays for cockroaches and ants that are no longer used had a collateral impact on bedbug infestations. Recently, a switch has been made to bait insecticides that have proven effective against cockroaches but have allowed bed bugs to escape the indirect treatment.

The number of bedbug infestations has risen significantly since the early 21 st century. The National Pest Management Association has reported a 71% increase in bedbug calls between 2000 and 2005. The Steritech Group, a pest-management company based in Charlotte, North Carolina, claimed that 25% of the 700 hotels they surveyed between 2002 and 2006 needed bedbug treatment. In 2003, a brother and sister staying at a Motel 6 in Chicago were awarded $372,000 in punitive damages after being bitten by bedbugs during their stay.

With the widespread use of DDT in the 1940s and 1950s, bed bugs all but disappeared from North America in the mid-twentieth century. Infestations remained common in many other parts of the world and in recent years have also begun to rebound in North America. Reappearance of bed bugs has presented new challenges for pest control without DDT and similarly banned agents.

Another reason for the increase in bed bugs is that pest control services more often nowadays use low toxicity gel-based pesticides for control of cockroaches, the most common pest in structures, instead of residual sprays. When residual sprays meant to kill other insects were commonly being used, they resulted in a collateral insecticidal effect on potential bedbug infestations; the gel-based insecticides primarily used nowadays do not have any effect on bed bugs, as they are incapable of feeding on these baits.

David J. Moore et al: "Laboratory Evaluations of Insecticide Product Efficacy for Control of Cimex lectularius", Journal of Economic Entomology, vol. 99, no. 6, 1 December 2006 (2006-12-01), pages 2080-2086, ISSN: 0022-0493, D0I: 10.1603/0022-0493-99.6.2080" discloses the technological background.

There is, therefore, a need for safe and effective methods to control or repel bed bugs and for safe and effective means to employ such chemicals for the control or repellency of bed bugs. This problem is overcome with the features of the claims.

### Summary of The Invention

Safe and effective control or repellency of bed bugs can be accomplished with the claimed method. The compounds may be present in any of their isomeric or enantiomeric forms or as mixtures of their isomers or enantiomers. Further aspects of this invention relate to the use of such formulations in various methods for the control or repellency of bed bugs. Among the various methods in which the formulations of this invention may be employed are (1) injecting the formulations into a mattress, either directly or in combination with other ingredients or solvents, (2) placing the formulations on an absorbent material and placing the absorbent material in a sachet and placing the sachet containing the formulation into a locus such as a mattress, hamper, suitcase, clothing bag, linen storage closet or any other enclosure where bed bugs may be present, (3) preparing "dryer sheets" containing the formulations for placement in a locus such as a mattress, suitcase, clothing bag, hamper, clothing bag, linen storage closet, or any other enclosure where bed bugs are likely to be present, or in a pile of clean or soiled or dirty laundry, (4) placing the formulation into detergent or fabric softener compositions for controlling bed bugs during use of these compositions in cleaning clothes and sprays or in carpet or floor cleaner products the like to treat carpets and furniture, and (5) topical application of the formulation intended for use with humans or animals., such as in the form of a lotion, powder, spray or shampoo.

### Detailed Disclosure of the Invention

Safe and effective control or repellency of bed bugs can be accomplished with the use of formulations containing at least one compound selected from geranylacetone (6,10-dimethyl-5,9-undecadien-2-one), methyl undecyl ketone (2-tridecanone), geranylcyclopentanone and also known as apritone (2-(3,7-dimethylocta-2,6-dienyl)cyclopentan-1-one), methyl apritone (2-(3,7-dimethyl-2,6-nonadienyl)-cyclopentanone), (5Z) cyclohexadec-5-ene-1-one, methyl dihydrojasmonate (methyl 3-oxo-2-pentylcyclopenteacetate), octenylcyclopentanone (2-(2-octen-1-yl)-cyclopentanone), methyl decyl ketone (2-dodecanone), nootkatone (4,4a-dimethyl-6-prop-1-en-2-yl-3,4,5,6,7,8-hexahydronaphthalen-2-one), alpha-ionone (4-(2,6,6-trimethyl-2-cyclohexenyl)-3-buten-2-one), beta ionone (4-(2,6,6-trimethyl-1-cyclohexenyl)-3-buten-2-one), alpha-isomethylionone (3-methyl-4-(2,6,6-trimethyl-2-cyclohexen-1-yl)-3-buten-2-one), (2-(2-(4-methyl-3-cyclohexen-1-yl) propyl) cyclopentanone), isobutylionone ((E)-5-Methyl-1-(2,6,6-trimethyl-1-cyclohex-2-enyl) hex-1-en-3-one), dimethylionone ((E)-2-methyl-1-(2,2,6-trimethyl-1-cyclohex-3-enyl)pent-1-en-3-one), isolongifolanone (2,2,7,7-tetramethyltricyclo [6.2.1.01,6]undecan-5-one), pseudoionone (6,10-dimethyl-3,5,9-undecatrien-2-one), 2-cyclopentylcyclopentanone, methyl nonyl ketone, 2-decen-2-one and 1-carvone. Especially preferred are octenyl cyclopentanone, geranyl cyclopentanone, methyl apritone, methyl decyl ketone, and other C₁₅-C₁₆ cyclic ketones, methyl undecyl ketone and other C₁₃-C₁₆ methyl ketones, geranylacetone, ionone, nootkatone, and methyl dihydrojasmonate. The most preferred are apritone, methyl apritone, methyl undecyl ketone, and other C₁₅-C₁₆ cyclic ketones, and methyl dihydrojasmonate.

An embodiment of the invention comprises a method for control or repellency of bed bugs by bringing the bed bugs into contact with at least one repellent compound selected from the group consisting of an alkyl ketone and a cyclic ketone such that the bed bugs come into contact with the vapors of the compound(s). The compounds may be present in any of their isomeric or enantiomeric forms or as mixtures of their isomers or enantiomers Another embodiment of this invention comprises a method for control or repellency of bed bugs by placing into an area suspected of possibly containing bed bugs a formulation containing at least one compound selected from the group consisting of an alkyl ketone and a cyclic ketone such that the bed bugs come into contact with the compound(s) or the vapors of the compound(s). Further embodiments of the invention comprise the aforesaid methods wherein the formulation is sprayed onto or injected into a mattress. Yet another embodiment of the invention comprises the aforesaid methods wherein the formulation is on an absorbent material located in a sachet placed into the suspected area such as a mattress, hamper, suitcase, clothing bag, linen storage closet, or other enclosure where bed bugs may be present. A still further embodiment of the invention comprises the aforesaid methods wherein the formulation is included in a detergent or fabric softener composition. An even still further embodiment of the invention comprises the aforesaid methods wherein the formulation is included in a form similar to a dryer type sheet which may be placed in a mattress, hamper, suitcase, clothing bag, linen storage closet, or in piles of clothes, including clean, dirty or soiled laundry. A still further embodiment of the invention wherein the use of the formulation, preferably in the form of a spray or aerosol, is for application onto or into furniture, fabrics, clothing, footwear, carpets, or luggage (including in public or common areas such as hotels, airplane luggage compartments or other storage facilities to prevent cross contamination. The formulation may be incorporated into a treatment for protecting luggage, furniture, or goods for storage or transport. Dryer sheets are paper or cloth-like sheets generally about one square foot in area that are put into clothe dryers to eliminate static, soften fabrics and add fragrances. A similar dryer sheet type product may be made using the compounds mentioned in claim 1 in place of or in addition to the fragrance. The large surface area of the dryer type sheets will be ideal to promote rapid volatilization of the active ingredients into the areas where bed bugs may be present. Yet another embodiment of this invention comprises the use of said formulations in the aforesaid method wherein the formulation is in a powder form, or as a spray or aerosol, suitable for application to furniture or carpets. Additionally, the aforementioned compound(s) may be incorporated into various home cleaning products for use on carpets, floors, walls, closets; furniture, and the like.

As used herein, the term "carrier" refers to a material, which may be inorganic or organic and of synthetic or natural origin, with which the active compound is mixed or formulated to facilitate its application to a locus or other object to be treated, or its storage, transport and/or handling. In general, any material that may be customarily employed as a carrier in pesticidal formulations are suitable for use with the present invention. The pesticidal compositions provided herein may be employed alone or in the form of mixtures with such solid and/or liquid dispersible carrier vehicles. As used herein, "carriers" include conventional inert pesticide diluents or extenders of the type usable in conventional pesticide formulations or compositions, e.g., conventional pesticide dispersible carrier vehicles such as solutions, emulsions, suspensions, emulsifiable concentrates, spray powders, pastes, soluble powders, dusting agents, granules, foams, pastes, tablets, aerosols, natural and synthetic materials impregnated with active compounds, microcapsules, fumigating cartridges, fumigating cans and fumigating coils, as well as cold mist and warm mist formulations.

Examples of conventional carrier vehicles for use herein include, but are not limited to, aerosol propellants which are gaseous at normal temperatures and pressures, such as propane, butane, isobutene and carbon dioxide; inert dispersible liquid diluent carriers, including inert organic solvents, such as aromatic hydrocarbons, e.g., benzene, toluene, xylene, alkyl naphthalenes, halogenated aromatic hydrocarbons, cycloalkanes, e.g., cyclohexane, paraffins, e.g., petroleum or mineral oil fractions, chlorinated aliphatic hydrocarbons, e.g., methylene chloride, chloroethylenes, alcohols, e.g., methanol, ethanol, propanol, butanol, ethylene or propylene glycol, as well as ethers and esters thereof, e.g., glycol monomethyl ether, amines, e.g., ethanolamine, amides, e.g., dimethyl formamide, sulfoxides, e.g., dimethyl sulfoxide, acetonitrile, ketones, e.g., acetone, methyl ethyl ketone, methyl isobutyl ketone, cyclohexanone, and/or water, as well as inert dispersible finely divided solid carriers such as ground natural minerals, e.g., kaolins, clays, vermiculite, alumina, silica, chalk, i.e., calcium carbonate, talc, attapulgite, montmorillonite, kieselguhr, and ground synthetic minerals, e.g., highly dispersed silicic acid, and silicates, e.g., alkali silicates

The formulations used in this invention are formulated to provide a control or repellency effective surface concentration in the locus being treated of from about 1 mcg (microgram) to 5 mg (milligram) per sq inch, or in liquid solutions from 0.01% to 10%, or applied directly at full strength. Topical application may be in the range of 0.1% to 100%, more preferably at a concentration from 1% to 15%.

The utility and effectiveness of the invention is illustrated by, but not limited to, the following examples.

This test was undertaken employing unconcealed bugs. Two semicircular discs of filter paper, 9 cm in radius treated with 1 ml of solution to wet the entire surface, one treated with an acetone solution of the test compound and one only acetone treated were placed on the lid of a Petri dish. Five replicates of ten (10) bed bugs were release into the center of the lids of the Petri dish with a choice of the test compound treated or only acetone treated substrate. The distribution of bed bugs was recorded at ½, 1,6 and 24 hours post-treatment. Paired t-tests were conducted for each treatment to ascertain whether or not there was a statistically significant difference in the number of bed bugs on the treated vs. untreated discs. The results for the test compounds were as set forth in the following Table wherein the values represent a ratio of the bed bugs in the treated portion of the disc to the total number of bed bugs on both the treated and untreated discs at the indicated time period.

**Table**

| **Chemical at 0.5% unless noted otherwise** | **0.5 hr** | **1 hr** | **6 hr** | **24 hr** | **Average** |
|---|---|---|---|---|---|
| 2-Octenylcyclopentanone | 0.0% | 0.0% | 0.0% | 0.0% | 0.0% |
| 2-Geranylcyclopentanone (Apritone) | 0.0% | 0.0% | 0.0% | 0.0% | 0.0% |
| Methyl decyl ketone | 0.0% | 0.0% | 0.0% | 0.0% | 0.0% |
| Methyl Apritone - at 0.2% | 0.0% | 0.0% | 0.0% | 0.0% | 0.0% |
| Cyclohexadec-5-ene-1-one-at 0.1% | 6.0% | 6.0% | 0.0% | 0.0% | 3.0% |
| Methyl dihydrojasmonate-at 0.2% | 14.0% | 4.0% | 6.0% | 8.0% | 8.0% |
| Methyl jasmonate at 0.2% | 20.0% | 10.0% | 10.0% | 12.0% | 13.0% |
| Nootkatone | 0.0% | 0.0% | 0.0% | 0.0% | 0.0% |
| Geranylacetone | 0.0% | 0.0% | 0.0% | 0.0% | 0.0% |
| Methyl undecyl ketone | 0.0% | 0.0% | 0.0% | 0.0% | 0.0% |
| Isolongifolen-9-one | 8.0% | 4.0% | 0.0% | 2.0% | 3.5% |
| Isobutylionone | 0.0% | 2.0% | 6.0% | 6.0% | 3.5% |
| Alpha Ionone | 0.0% | 0.0% | 0.0% | 16.0% | 4.0% |
| Alpha Isomethylionone | 0.0% | 0.0% | 0.0% | 16.0% | 4.0% |
| Nectaryl | 12.2% | 4.1% | 0.0% | 0.0% | 4.1% |
| Dimethylionone | 10.0% | 4.0% | 4.0% | 8.0% | 6.5% |
| Isolongifolanone | 10.0% | 12.0% | 2.0% | 2.0% | 6.5% |
| I-Carvone (1% Spearmint Oil containing 80% I-Carvone) | 18.0% | 16.0% | 6.0% | 20.0% | 15.0% |
| 2-Cyclopentylcyclopentanone | 10.0% | 10.0% | 24.0% | 30.0% | 18.5% |
| Methyl nonyl ketone | 14.3% | 16.0% | 20.0% | 26.0% | 19.1% |
| 3-Decen-2-one | 18.0% | 16.0% | 22.0% | 24.0% | 20.0% |
| 2,3-Undecanedione | 10.0% | 40.0% | 40.0% | 10.0% | 25.0% |
| Butyl levulinate at 0.2% | 36.0% | 32.0% | 38.0% | 40.0% | 36.5% |

While the exact mechanism of the superiority of the compounds of this disclosure containing from 12 to 16 carbon atoms relative to compounds of this disclosure having less than 12 carbon atoms or more than 16 carbon atoms is not known for sure, it is thought to relate to the fit of the compounds with receptors or binding proteins of the bedbugs.

## Claims

1. A non-therapeutic method for control or rep ellency of bed bugs comprising bringing the bed bugs into direct contact or contact with vapors of a bed bug control formulation, said bed bug control formulation containing at least one compound selected from the group consisting of geranylacetone (6,10-dimethyl-5,9-undecadien-2-one), methyl undecyl ketone (2-tridecanone), geranylcyclopentanone and also known as apritone (2-(3,7-dimethylocta-2,6-dienyl)cyclopentan-1-one), methyl apritone (2-(3,7-dimethyl-2,6-nonadienyl)-cyclopentanone), (5Z) cyclohexadec-5-ene-1-one, methyl dihydrojasmonate (methyl 3-oxo-2-pentylcyclopenteacetate), octenylcyclopentanone (2-(2-octen-1-yl)-cyclopentanone), methyl decyl ketone (2-dodecanone), nootkatone (4,4a-dimethyl-6-prop-1-en-2-yl-3,4,5,6,7,8-hexahydronaphthalen-2-one), alpha-ionone (4-(2,6,6-trimethyl-2-cyclohexenyl)-3-buten-2-one), beta ionone (4-(2,6,6-trimethyl-1-cyclohexenyl)-3-buten-2-one), alpha-isomethylionone (3-methyl-4-(2,6,6-trimethyl-2-cyclohexen-1-yl)-3-buten-2-one), (2-(2-(4-methyl-3-cyclohexen-1-yl)propyl) cyclopentanone), isobutylionone ((E)-5-methyl-1-(2,6,6-trimethyl-1-cyclohex-2-enyl)hex-1-en-3-one), dimethylionone ((E)-2-methyl-1-(2,2,6-trimethyl-1-cyclohex-3-enyl)pent-1-en-3-one), isolongifolanone (2,2,7,7-tetramethyltricyclo [6.2.1.01,6]undecan-5-one), pseudoionone (6,10-dimethyl-3,5,9-undecatrien-2-one), 2-cyclopentylcyclopentanone, methyl nonyl ketone, 2-decen-2-one and 1-carvone.

2. The method according to claim 1 wherein the total number of carbon atoms in the alkyl ketones and cyclic ketones is from 12 to 16 carbon atoms.

3. The method according to claim 1 wherein the formulation is sprayed onto or injected into a mattress.

4. The method according to claim 1 wherein the formulation is on an absorbent material located in a sachet placed into the suspected area.

5. The method according to claim 4 wherein the sachet is placed in a locus selected from a mattress, hamper, suitcase, clothing bag, or linen storage closet.

6. The method according to claim 1 wherein the formulation is included in a detergent or fabric softener composition.

7. The method according to claim 1 wherein the formulation is included in a dryer type sheet.

8. The method according to claim 7 wherein the dryer type sheet is placed in a locus selected from a mattress, hamper, suitcase, clothing bag, and linen storage closet, or is placed in a pile of clean, soiled or dirty laundry.

9. The method according to claim 1 wherein the formulation is placed on or in a carpet or furniture.

10. The method according to claim 1 wherein the formulation is sprayed onto or placed in a fabric, furniture, clothing, footwear, carpet or luggage.

11. The method according to claim 1 wherein the formulation is incorporated into a detergent, fabric softener, carpet or floor cleaner, or is incorporated into a treatment for protecting luggage, furniture, or goods for storage or transport.

12. A non-therapeutic method for control or repellency of bed bugs comprising placing into an area suspected of possibly containing bed bugs a bed bug control formulation, said bed bug control formulation containing at least one compound selected from the group consisting of geranylacetone (6,10-dimethyl-5,9-undecadien-2-one), methyl undecyl ketone (2-tridecanone), geranylcyclopentanone and also known as apritone (2-(3,7-dimethylocta-2,6-dienyl)cyclopentan-1-one), methyl apritone (2-(3,7-dimethyl-2,6-nonadienyl)-cyclopentanone), (5Z) cyclohexadec-5-ene-1-one, methyl dihydrojasmonate (methyl 3-oxo-2-pentylcyclopenteacetate), octenylcyclopentanone (2-(2-octen-1-yl)-cyclopentanone), methyl decyl ketone (2-dodecanone), nootkatone (4,4a-dimethyl-6-prop-1-en-2-yl-3,4,5,6,7,8-hexahydronaphthalen-2-one), alpha-ionone (4-(2,6,6-trimethyl-2-cyclohexenyl)-3-buten-2-one), beta ionone (4-(2,6,6-trimethyl-1-cyclohexenyl)-3-buten-2-one), alpha-isomethylionone (3-methyl-4-(2,6,6-trimethyl-2-cyclohexen-1-yl)-3-buten-2-one), (2-(2-(4-methyl-3-cyclohexen-1-yl)propyl) cyclopentanone), isobutylionone ((E)-5-methyl-1-(2,6,6-trimethyl-1-cyclohex-2-enyl)hex-1-en-3-one), dimethylionone ((E)-2-methyl-1-(2,2,6-trimethyl-1-cyclohex-3-enyl)pent-1-en-3-one), isolongifolanone (2,2,7,7-tetramethyltricyclo [6.2.1.01,6]undecan-5-one), pseudoionone (6,10-dimethyl-3,5,9-undecatrien-2-one), 2-cyclopentylcyclopentanone, methyl nonyl ketone, 2-decen-2-one and 1-carvone, so that bed bugs may be contacted with the vapor from the formulation so that direct contact with the liquid or formulated application method is not necessary.

## Patentansprüche

1. Nicht-therapeutisches Verfahren zur Bekämpfung oder Abwehr von Bettwanzen, umfassend das Bringen der Bettwanzen in direkten Kontakt mit oder in Kontakt mit Dämpfen einer Bettwanzen-Bekämpfungsformulierung, wobei die Bettwanzen-Bekämpfungsformulierung mindestens eine Verbindung umfasst, ausgewählt aus der Gruppe, bestehend aus Geranylaceton (6,10-Dimethyl-5,9-undecadien-2-on), Methylundecylketon (2-Tridecanon), Geranylcyclopentanon und auch bekannt als Apriton (2-(3,7-Dimethylocta-2,6-dienyl)cyclopentan-1-on), Methyl-Apriton (2-(3,7-Dimethyl-2,6-nonadienyl)-cyclopentanon), (5Z)-Cyclohexadec-5-en-1-on, Methyldihydrojasmonat (Methyl-3-oxo-2-pentylcyclopentanacetat), Octenylcyclopentanon (2-(2-Octen-1-yl)-cyclopentanon), Methyldecylketon (2-Dodecanon), Nootkaton (4,4a-Dimethyl-6-prop-1-en-2-yl-3,4,5,6,7,8-hexahydronaphthalen-2-on), alpha-Jonon (4-(2,6,6-Trimethyl-2-cyclohexenyl)-3-buten-2-on), beta-Jonon (4-(2,6,6-Trimethyl-1-cyclohexenyl)-3-buten-2-on), alpha-Isomethyljonon (3-Methyl-4-(2,6,6-trimethyl-2-cyclohexen-1-yl)-3-buten-2-on), (2-(2-(4-Methyl-3-cyclohexen-1-yl)-propyl)-cyclopentanon), Isobutyljonon ((E)-5-Methyl-1-(2,6,6-trimethyl-1-cyclohex-2-enyl)-hex-1-en-3-on), Dimethyljonon ((E)-2-Methyl-1-(2,2,6-trimethyl-1-cyclohex-3-enyl)-pent-1-en-3-on), Isolongifolanon (2,2,7,7-Tetramethyltricyclo[6.2.1.0(1,6)]-undecan-5-on), Pseudojonon (6,10-Dimethyl-3,5,9-undecatrien-2-on), 2-Cyclopentylcyclopentanon, Methylnonylketon, 2-Decen-2-on und 1-Carvon.

2. Verfahren nach Anspruch 1, wobei die Gesamtanzahl an Kohlenstoffatomen in den Alkylketonen und zyklischen Ketonen von 12 bis 16 Kohlenstoffatomen reicht.

3. Verfahren nach Anspruch 1, wobei die Formulierung auf eine Matratze aufgesprüht oder in diese injiziert wird.

4. Verfahren nach Anspruch 1, wobei die Formulierung auf einem absorbierenden Material ist, das sich in einem Tütchen befindet, das in dem verdächtigen Bereich platziert wird.

5. Verfahren nach Anspruch 4, wobei das Tütchen an einem Ort platziert wird, der aus einer Matratze, einem Korb, einem Koffer, einem Kleidersack oder einem Leinenaufbewahrungsschrank ausgewählt wird.

6. Verfahren nach Anspruch 1, wobei die Formulierung in eine Detergens- oder Weichspülerzusammensetzung eingeschlossen wird.

7. Verfahren nach Anspruch 1, wobei die Formulierung in eine Lage des Trockenmitteltyps eingeschlossen wird.

8. Verfahren nach Anspruch 7, wobei die Lage des Trockenmitteltyps an einem Ort platziert wird, der aus einer Matratze, einem Korb, einem Koffer, einem Kleidersack und einem Leinenaufbewahrungsschrank ausgewählt wird, oder in einem Stapel sauberer, verschmutzter oder schmutziger Wäsche platziert wird.

9. Verfahren nach Anspruch 1, wobei die Formulierung auf einem oder in einem Teppich oder Möbel platziert wird.

10. Verfahren nach Anspruch 1, wobei die Formulierung auf ein Gewebe, Möbel, Kleidung, Schuhe, einen Teppich oder Gepäck aufgesprüht oder darin platziert wird.

11. Verfahren nach Anspruch 1, wobei die Formulierung in ein Detergens, einen Weichspüler, einen Teppich- oder einen Bodenreiniger eingeschlossen wird oder in eine Behandlung zum Schützen von Gepäck, Möbeln oder Waren zur Lagerung oder für den Transport eingeschlossen wird.

12. Nicht-therapeutisches Verfahren zur Bekämpfung oder Abwehr von Bettwanzen, umfassend das Platzieren einer Bettwanzen-Bekämpfungsformulierung in einem Bereich, bei dem der Verdacht besteht, dass er möglicherweise Bettwanzen enthält, wobei die Bettwanzen-Bekämpfungsformulierung mindestens eine Verbindung umfasst, ausgewählt aus der Gruppe, bestehend aus Geranylaceton (6,10-Dimethyl-5,9-undecadien-2-on), Methylundecylketon (2-Tridecanon), Geranylcyclopentanon und auch bekannt als Apriton (2-(3,7-Dimethylocta-2,6-dienyl)cyclopentan-1-on), Methyl-Apriton (2-(3,7-Dimethyl-2,6-nonadienyl)-cyclopentanon), (5Z)-Cyclohexadec-5-en-1-on, Methyldihydrojasmonat (Methyl-3-oxo-2-pentylcyclopentanacetat), Octenylcyclopentanon (2-(2-Octen-1-yl)-cyclopentanon), Methyldecylketon (2-Dodecanon), Nootkaton (4,4a-Dimethyl-6-prop-1-en-2-yl-3,4,5,6,7,8-hexahydronaphthalen-2-on), alpha-Jonon (4-(2,6,6-Trimethyl-2-cyclohexenyl)-3-buten-2-on), beta-Jonon (4-(2;6,6-Trimethyl-1-cyclohexenyl)-3-buten-2-on), alpha-Isomethyljonon (3-Methyl-4-(2,6,6-trimethyl-2-cyclohexen-1-yl)-3-buten-2-on), (2-(2-(4-Methyl-3-cyclohexen-1-yl)-pröpyl)-cyclopentanon), Isobutyljonon ((E)-5-Methyl-1-(2,6,6-trimethyl-1-cyclohex-2-enyl)-hex-1-en-3-on), Dimethyljonon ((E)-2-Methyl-1-(2,2,6-trimethyl-1-cyclohex-3-enyl)-pent-1-en-3-on), Isolongifolanon (2,2,7,7-Tetramethyltricyclo[6.2.1.0(1,6)]-undecan-5-on), Pseudojonon (6,10-Dimethyl-3,5,9-undecatrien-2-on), 2-Cyclopentylcyclopentanon, Methylnonylketon, 2-Decen-2-on und 1-Carvon, so dass Bettwanzen mit dem Dampf aus der Formulierung in Kontakt gebracht werden können, so dass ein direkter Kontakt mit der Flüssigkeit oder dem formulierten Applikationsverfahren nicht notwendig ist.

## Revendications

1. Procédé non thérapeutique pour lutter contre ou repousser les punaises de lit comprenant la mise en contact directe des punaises de lit avec les vapeurs d'une formulation de lutte contre les punaises de lit, ladite formulation de lutte contre les punaises de lit contenant au moins un composé choisi parmi le groupe constitué de la géranylacétone (6,10-diméthyl-5,9-undécadién-2-one), la méthylundécylcétone (2-tridécanone), la géranylcyclopentanone et également connue sous le nom d'apritone (2-(3,7-diméthylocta-2,6-diényl)cyclopentan-1-one), la méthylapritone (2-(3,7-diméthyl-2,6-nonadiényl)-cyclopentanone), la (5Z) cyclohexadéc-5-ène-1-one, le méthyldihydrojasmonate (méthyl 3-oxo-2-pentylcyclopentaneacétate), l'octénylcyclopentanone (2-(2-octén-1-yl)-cyclopentanone), la méthyldécylcétone (2-dodécanone), la nootkatone (4,4a-diméthyl-6-prop-1-én-2-yl-3,4,5,6,7,8-hexahydronaphtalén-2-one), l'alpha-ionone (4-(2,6,6-triméthyl-2-cyclohexényl)-3-butén-2-one), la bêta-ionone (4-(2,6,6-triméthyl-1-cyclohexényl)-3-butén-2-one), l'alpha-isométhylionone (3-méthyl-4-(2,6,6-triméthyl-2-cyclohexén-1-yl)-3-butén-2-one), (2-(2-(4-méthyl-3-cyclohexen-1-yl)propyl)cyclopentanone), l'isobutylionone ((E)-5-méthyl-1-(2,6,6-triméthyl-1-cyclohex-2-ényl)hex-1-én-3-one), la diméthylionone ((E)-2-méthyl-1-(2,2,6-triméthyl-1-cyclohex-3-ényl)pent-1-én-3-one), l'isolongifolanone (2,2,7,7-tétraméthyltricyclo[6.2.1.0(1,6)]undécan-5-one), la pseudoionone (6,10-diméthyl-3,5,9-undécatrién-2-one), la 2-cyclopentylcyclopentanone, la méthylnonylcétone, la 2-décén-2-one et la 1-carvone.

2. Procédé selon la revendication 1, dans lequel le nombre total d'atomes de carbone dans les cétones alkyliques et les cétones cycliques varie de 12 à 16 atomes de carbone.

3. Procédé selon la revendication 1, dans lequel la formulation est pulvérisée sur ou injectée dans un matelas.

4. Procédé selon la revendication 1, dans lequel la formulation est placée sur un matériau absorbant situé dans un sachet placé dans la zone suspecte.

5. Procédé selon la revendication 4, dans lequel le sachet est placé dans un endroit choisi parmi un matelas, un panier à linge, une valise, un sac à vêtements ou un placard de stockage de linge.

6. Procédé selon la revendication 1, dans lequel la formulation est incluse dans une composition de détergent ou de produit assouplissant.

7. Procédé selon la revendication 1, dans lequel la formulation est incluse dans une feuille de séchage.

8. Procédé selon la revendication 7, dans lequel la feuille de séchage est placée dans un endroit choisi parmi un matelas, un panier à linge, une valise, un sac à vêtements ou un placard de stockage de linge, ou est placée dans une pile de lessive propre, souillée ou sale.

9. Procédé selon la revendication 1, dans lequel la formulation est placée sur ou dans un tapis ou un meuble.

10. Procédé selon la revendication 1, dans lequel la formulation est pulvérisée sur ou placée dans un tissu, un meuble, des vêtements, des souliers, un tapis ou des bagages.

11. Procédé selon la revendication 1, dans lequel la formulation est incorporée dans un détergent, un assouplissant, un nettoyeur de tapis ou de plancher, ou est incorporée dans un traitement pour la protection de bagages, d'un meuble ou de biens pour entreposage ou transport.

12. Procédé non thérapeutique pour lutter contre ou repousser des punaises de lit comprenant le placement dans une zone suspecte qui contient peut-être des punaises de lit d'une formulation de lutte contre les punaises de lit, ladite formulation de lutte contre les punaises de lit contenant au moins un composé choisi parmi le groupe constitué de la géranylacétone (6,10-diméthyl-5,9-undécadien-2-one), la méthylundécylcétone (2-tridécanone), la géranylcyclopentanone et également connue sous le nom d'apritone (2-(3,7-diméthylocta-2,6-diényl)cyclopentan-1-one), la méthylapritone (2-(3,7-diméthyl-2,6-nonadiényl)-cyclopentanone), la (5Z) cyclohexadéc-5-ène-1-one, le méthyldihydrojasmonate (méthyl 3-oxo-2-pentylcyclopentaneacétate), l'octénylcyclopentanone (2-(2-octén-1-yl)-cyclopentanone), la méthyldécylcétone (2-dodécanone), la nootkatone (4,4a-diméthyl-6-prop-1-én-2-yl-3,4,5,6,7,8-hexahydronaphtalén-2-one), l'alpha-ionone (4-(2,6,6-triméthyl-2-cyclohexényl)-3-butén-2-one), la bêta ionone (4-(2,6,6-triméthyl-1-cyclohexényl)-3-butén-2-one), l'alpha-isométhylionone (3-méthyl-4-(2,6,6-triméthyl-2-cyclohexén-1-yl)-3-butén-2-one), (2-(2-(4-méthyl-3-cyclohexén-1-yl)propyl)cyclopentanone), l'isobutylionone ((E)-5-méthyl-1-(2,6,6-triméthyl-1-cyclohex-2-ényl)hex-1-én-3-one), la diméthylionone ((E)-2-méthyl-1-(2,2,6-triméthyl-1-cyclohex-3-ényl)pent-1-én-3-one), l'isolongifolanone (2,2,7,7-tétraméthyltricyclo[6.2.1.0(1,6)]undécan-5-one), la pseudoionone (6,10-diméthyl-3,5,9-undécatrién-2-one), la 2-cyclopentylcyclopentanone, la méthylnonylcétone, la 2-décén-2-one et la 1-carvone, de sorte que les punaises de lit peuvent être mises en contact avec la vapeur de la formulation de sorte qu'un contact direct avec le liquide ou un procédé d'application formulé n'est pas nécessaire.
